# EUROPEAN PATENT APPLICATION

(11) **EP 4 669 002 A1**
(43) Date of publication of application: **24.12.2025**
(21) Application number: 24766473.3
(22) Date of filing: 06.03.2024
(51) Int. Cl.: H04W 72/566

(54) **COMMUNICATION METHOD, COMMUNICATION DEVICE, COMMUNICATION SYSTEM, AND STORAGE MEDIUM**

(30) Priority: 07.03.2023 CN 202310245072
(71) Applicant: Huawei Technologies Co., Ltd., Shenzhen, Guangdong 518129 (CN)
(72) Inventor: GUO, Yuchen, Shenzhen, Guangdong 518129 (CN); LI, Yunbo, Shenzhen, Guangdong 518129 (CN); YU, Jian, Shenzhen, Guangdong 518129 (CN); GAN, Ming, Shenzhen, Guangdong 518129 (CN)
(74) Representative: Gill Jennings & Every LLP
(86) International application number: PCT/CN2024/080353
(87) International publication number: WO 2024/183758

(57) **Abstract**

This application relates to the field of wireless communication technologies, and discloses a communication method, a communication device, a communication system, and a storage medium. This application is applied to a wireless local area network system that supports a next-generation Wi-Fi protocol of IEEE 802.11ax, for example, 802.11be, Wi-Fi 7, or EHT, or for another example, a next generation of 802.11be, such as an 802.11 series protocol like Wi-Fi 8, UHR, or Wi-Fi AI, and may be further applied to an ultra-wideband UWB-based wireless personal area network system and a sensing (sensing) system. In this application, a first communication device establishes a preemption session with a second communication device. During the preemption session, the first communication device and the second communication device may preferentially transmit a data packet of a low-latency service in a preemption transmission mode, to improve communication effect of the low-latency service.

## Description

### CROSS-REFERENCE TO RELATED APPLICATIONS

This application claims priority to Chinese Patent Application No. 202310245072.1, filed with the China National Intellectual Property Administration on March 7, 2023 and entitled "COMMUNICATION METHOD, COMMUNICATION DEVICE, COMMUNICATION SYSTEM, AND STORAGE MEDIUM", which is incorporated herein by reference in its entirety.

### TECHNICAL FIELD

This application relates to the field of wireless communication technologies, and in particular, to a communication method, a communication device, a communication system, and a storage medium.

### BACKGROUND

In the wireless communication field, the IEEE 802.11 protocol is one of current mainstream radio access standards, and uplink communication and downlink communication are performed between communication devices through the IEEE 802.11 protocol.

During communication, some services have a high requirement on a latency. For example, in some actual application scenarios such as virtual reality (Virtual Reality, VR), augmented reality (Augmented Reality, AR), industrial internet of things (internet of things, IoT), and telemedicine, there are requirements of low-latency services. However, a low-latency mechanism in the current IEEE 802.11 protocol cannot meet the requirements of the low-latency services.

### SUMMARY

This application provides a communication method, a communication device, a communication system, and a storage medium, to improve communication effect of a low-latency service.

According to a first aspect, an embodiment of this application provides a communication method, which may be applied to a first communication device in a communication system. The communication method may include: The first communication device sends a preemption setup request message to a second communication device, and receives a preemption setup response message sent by the second communication device, to establish a preemption session with the second communication device.

In the communication method provided in this embodiment of this application, the first communication device establishes the preemption session with the second communication device. During the preemption session, the first communication device and the second communication device may preferentially transmit a data packet of a low-latency service in a preemption transmission mode, to improve communication effect of the low-latency service.

In a possible implementation, the preemption setup request message includes preemption type information, the preemption type information indicates a preemption transmission mode of the first communication device, and the preemption transmission mode includes some or all of the following: a physical layer protocol data unit PPDU-level transmit-end transmission mode; a PPDU-level receive-end transmission mode; a transmission opportunity TXOP-level bidirectional transmit-end transmission mode; a TXOP-level bidirectional receive-end transmission mode; a TXOP-level hybrid transmit-end transmission mode; and a TXOP-level hybrid receive-end transmission mode.

In the PPDU-level transmit-end transmission mode, in a process of sending a first data packet to the second communication device, the first communication device interrupts the sending of the first data packet, and sends a second data packet to the second communication device or a third communication device, where the second data packet includes data of a low-latency service, and the low-latency service is a service in which a transmission latency of a data packet needs to be less than or equal to a specified latency value.

In the PPDU-level receive-end transmission mode, the first communication device receives a third data packet sent by the second communication device, where the third data packet is sent by the second communication device to the first communication device after the second communication device interrupts sending of a fourth data packet in a process of sending the fourth data packet to the third communication device, and the third data packet includes data of a low-latency service.

In the TXOP-level bidirectional transmit-end transmission mode, the first communication device sends a fifth data packet to the second communication device after obtaining a TXOP, and after transmission of the fifth data packet is completed, receives a sixth data packet sent by the second communication device, where the sixth data packet includes data of a low-latency service that arrives at the second communication device during receiving of the fifth data packet by the second communication device.

In the TXOP-level bidirectional receive-end transmission mode, after the second communication device obtains a TXOP, if a to-be-sent low-latency service arrives during receiving, by the first communication device, a seventh data packet sent by the second communication device, the first communication device directly sends an eighth data packet to the second communication device, where the eighth data packet includes a data packet of the to-be-sent low-latency service.

In the TXOP-level hybrid transmit-end transmission mode, the first communication device sends a ninth data packet to the second communication device after obtaining a TXOP, and if a to-be-sent low-latency service of the third communication device arrives at the second communication device during transmission of the ninth data packet, the second communication device directly sends a tenth data packet to the third communication device, where the tenth data packet includes a data packet of the to-be-sent low-latency service of the third communication device.

In the TXOP-level hybrid receive-end transmission mode, after the second communication device obtains a TXOP, if a to-be-sent low-latency service of the third communication device arrives during receiving, by the first communication device, an eleventh data packet sent by the second communication device, the first communication device directly sends a twelfth data packet to the third communication device, where the twelfth data packet includes a data packet of the to-be-sent low-latency service of the third communication device.

The first communication device may perform data transmission with the second communication device in any one of the foregoing preemption transmission modes.

In a possible implementation, after the first communication device receives the preemption setup response message returned by the second communication device, if the first communication device may use a specified preemption transmission mode during the preemption session, the first communication device disables an intra-PPDU power save (intra-PPDU power save) function within a specified time period, where the specified preemption transmission mode is the PPDU-level receive-end transmission mode.

In the foregoing implementation, the first communication device disables a device power save function within a specified time period. To be specific, the first communication device does not enter a sleep state when receiving a data packet that the first communication device does not need to receive. When the second communication device sends a data packet of a non-low-latency service to the third communication device, if the second communication device interrupts the sending of the data packet of the non-low-latency service and sends a data packet of a low-latency service to the first communication device through preemption transmission, because the first communication device does not enter the sleep state, the first communication device may receive the data packet of the low-latency service that is sent by the second communication device, to reduce a loss of the data packet of the low-latency service.

In a possible implementation, the preemption type information includes a plurality of indication fields, each indication field corresponds to a preemption transmission mode, and each indication field indicates whether the first communication device uses a corresponding preemption transmission mode; or the preemption type information includes one indication field, and different values of the indication field indicate different combinations of preemption transmission modes used by the first communication device; or the preemption type information includes a PPDU indication field or a TXOP indication field, where the PPDU indication field indicates whether the first communication device uses a PPDU-level transmission mode, and the TXOP indication field indicates whether the first communication device uses a TXOP-level transmission mode; or the preemption type information includes a transmit-end indication field or a receive-end indication field, where the transmit-end indication field indicates whether the first communication device uses a preemption transmission mode when serving as a transmit end, and the receive-end indication field indicates whether the first communication device uses a preemption transmission mode when serving as a receive end.

The preemption setup request message sent by the first communication device to the second communication device may carry the preemption type information in different manners.

In a possible implementation, the preemption setup request message includes at least one of first traffic identifier information, second traffic identifier information, or first preemption duration information. The first traffic identifier information is a traffic identifier of a low-latency service for which the first communication device allows a data packet to be transmitted in a preemption transmission mode. The second traffic identifier information is a traffic identifier of a non-low-latency service for which the first communication device allows transmission to be interrupted. The first preemption duration information indicates maximum duration for which the first communication device allows an obtained TXOP to be occupied by a communication device other than the first communication device in a preemption transmission mode.

In the foregoing implementation, the preemption setup request message carries preemption transmission parameter information of the first communication device, to enable the second communication device to perform data transmission with the first communication device based on the preemption transmission parameter information of the first communication device during communication.

In a possible implementation, the preemption setup response message includes status indication information, and the status indication information indicates whether the preemption session is successfully established.

In a possible implementation, the preemption setup response message further includes at least one of preemption type information, third traffic identifier information, fourth traffic identifier information, or second preemption duration information of the second communication device.

The preemption type information of the second communication device indicates a preemption transmission mode of the second communication device. The third traffic identifier information is a traffic identifier of a low-latency service for which the second communication device allows a data packet to be transmitted in a preemption transmission mode. The fourth traffic identifier information is a traffic identifier of a non-low-latency service for which the second communication device allows transmission to be interrupted. The second preemption duration information indicates maximum duration for which the second communication device allows an obtained TXOP to be occupied by a communication device other than the second communication device in a preemption transmission mode.

In the foregoing implementation, the preemption setup response message carries a preemption transmission parameter information of the second communication device, to enable the first communication device to perform data transmission with the second communication device based on the preemption transmission parameter information of the second communication device during communication.

In a possible implementation, the first communication device is a terminal device, the second communication device is an access point device, and before sending the preemption setup request message to the second communication device, the first communication device may further receive a beacon frame sent by the second communication device through broadcasting. The beacon frame includes at least one of preemption type information, third traffic identifier information, fourth traffic identifier information, or second preemption duration information of the second communication device.

The preemption type information of the second communication device indicates a preemption transmission mode of the second communication device. The third traffic identifier information is a traffic identifier of a low-latency service for which the second communication device allows a data packet to be transmitted in a preemption transmission mode. The fourth traffic identifier information is a traffic identifier of a non-low-latency service for which the second communication device allows transmission to be interrupted. The second preemption duration information indicates maximum duration for which the second communication device allows an obtained TXOP to be occupied by a communication device other than the second communication device in a preemption transmission mode.

In the foregoing implementation, the second communication device may notify the first communication device of the preemption transmission parameter information of the second communication device by broadcasting the beacon frame.

In a possible implementation, the preemption setup request message is a target wake time TWT setup request message, and the preemption setup response message is a TWT setup response message.

In a possible implementation, the TWT setup request message includes first indication information, and the first indication information is used to request to use preemption transmission in a corresponding restricted target wake time service period restricted TWT SP.

In the foregoing implementation, a preemption transmission process between communication devices may be implemented in the restricted TWT SP.

In a possible implementation, the first communication device is a terminal device, the second communication device is an access point device, and before sending the preemption setup request message to the second communication device, the method further includes:

receiving a beacon frame sent by the second communication device, where the beacon frame includes a restricted TWT element (restricted TWT element), the restricted TWT element includes second indication information, and the second indication information indicates that preemption transmission is allowed.

In a possible implementation, after receiving the preemption setup response message returned by the second communication device, the first communication device may further receive a first data packet sent by the second communication device, where the first data packet includes preemption indication information. The first communication device may send data of a low-latency service to the second communication device through preemption transmission based on the preemption indication information in the first data packet.

In a possible implementation, the preemption indication information indicates that the first communication device is allowed to perform preemption transmission after receiving the first data packet, or the preemption indication information indicates that a preemption transmission mode used by the first communication device after receiving the first data packet is allowed.

In the foregoing implementation, as a receive end of the first data packet, the first communication device may determine, based on the preemption indication information in the received first data packet, whether the first communication device can immediately send the data of the low-latency service after receiving the first data packet.

In a possible implementation, after receiving the preemption setup response message returned by the second communication device, the first communication device may further receive a first data packet sent by the second communication device. If a traffic identifier corresponding to data in the first data packet is included in the fourth traffic identifier information, the first communication device sends data of a low-latency service to the second communication device through preemption transmission.

In the foregoing implementation, as a receive end of the first data packet, the first communication device may determine, based on the traffic identifier corresponding to the data in the received first data packet, whether the first communication device can immediately send the data of the low-latency service after receiving the first data packet.

In a possible implementation, the first communication device may send a second data packet to the second communication device within preset time after sending an acknowledgement frame for the first data packet to the second communication device, where the second data packet includes the data of the low-latency service, and the preset time is less than a short inter-frame space SIFS; or the first communication device may send a second data packet to the second communication device, where the second data packet includes an acknowledgement frame for the first data packet and the data of the low-latency service; or the first communication device may send a second data packet to the second communication device after sending an acknowledgement frame for the first data packet to the second communication device, where the acknowledgement frame carries continuous-transmission indication information, the continuous-transmission indication information indicates that a data packet is further to be sent to the second communication device after the acknowledgement frame is sent, and the second data packet includes the data of the low-latency service.

In the foregoing implementation, as a transmit end of the first data packet, after sending the first data packet, the second communication device may learn that a receive end is to immediately send a data packet of the low-latency service after the second communication device sends the first data frame, and the second communication device is not to perform subsequent data sending, but waits to receive the data of the low-latency service, to avoid a conflict.

According to a second aspect, an embodiment of this application provides a communication method, applied to a first communication device. The communication method includes: receiving a first data packet sent by a second communication device; and sending data of a low-latency service to the second communication device through preemption transmission based on a traffic identifier corresponding to data in the first data packet or based on preemption indication information in the first data packet.

In a possible implementation, the preemption indication information indicates that the first communication device is allowed to perform preemption transmission after receiving the first data packet, or the preemption indication information indicates that a preemption transmission mode used by the first communication device after receiving the first data packet is allowed.

In a possible implementation, if the traffic identifier corresponding to the data in the first data packet is included in fourth traffic identifier information, the first communication device may send the data of the low-latency service to the second communication device through preemption transmission, where the fourth traffic identifier information is a traffic identifier of a non-low-latency service for which the second communication device allows transmission to be interrupted.

In a possible implementation, the first communication device may send a second data packet to the second communication device within preset time after sending an acknowledgement frame for the first data packet to the second communication device, where the second data packet includes the data of the low-latency service, and the preset time is less than a short inter-frame space SIFS; or send a second data packet to the second communication device, where the second data packet includes an acknowledgement frame for the first data packet and the data of the low-latency service; or send a second data packet to the second communication device after sending an acknowledgement frame for the first data packet to the second communication device, where the acknowledgement frame carries continuous-transmission indication information, the continuous-transmission indication information indicates that a data packet is further to be sent to the second communication device after the acknowledgement frame is sent, and the second data packet includes the data of the low-latency service.

According to a third aspect, an embodiment of this application provides a communication method, applied to a second communication device. The communication method may include:
receiving a preemption setup request message sent by a first communication device; and
sending a preemption setup response message to the first communication device, to establish a preemption session with the first communication device.

In a possible implementation, the preemption setup response message includes status indication information, and the status indication information indicates whether the preemption session is successfully established.

In a possible implementation, the preemption setup response message further includes at least one of preemption type information, third traffic identifier information, fourth traffic identifier information, or second preemption duration information of the second communication device.

The preemption type information indicates a preemption transmission mode of the second communication device. The third traffic identifier information is a traffic identifier of a low-latency service for which the second communication device allows a data packet to be transmitted in a preemption transmission mode. The fourth traffic identifier information is a traffic identifier of a non-low-latency service for which the second communication device allows transmission to be interrupted. The second preemption duration information indicates maximum duration for which the second communication device allows an obtained TXOP to be occupied by a communication device other than the second communication device in a preemption transmission mode.

In a possible implementation, the preemption transmission mode includes some or all of the following:
a physical layer protocol data unit PPDU-level transmit-end transmission mode;
a PPDU-level receive-end transmission mode;
a transmission opportunity TXOP-level bidirectional transmit-end transmission mode;
a TXOP-level bidirectional receive-end transmission mode;
a TXOP-level hybrid transmit-end transmission mode; and
a TXOP-level hybrid receive-end transmission mode.

In a possible implementation, the second communication device is an access point device, the first communication device is a terminal device, and before receiving the preemption setup request message sent by the first communication device, the method further includes:
sending a beacon frame through broadcasting, where the beacon frame includes at least one of preemption type information, third traffic identifier information, fourth traffic identifier information, or second preemption duration information of the second communication device.

The preemption type information of the second communication device indicates a preemption transmission mode of the second communication device. The third traffic identifier information is a traffic identifier of a low-latency service for which the second communication device allows a data packet to be transmitted in a preemption transmission mode. The fourth traffic identifier information is a traffic identifier of a non-low-latency service for which the second communication device allows transmission to be interrupted. The second preemption duration information indicates maximum duration for which the second communication device allows an obtained TXOP to be occupied by a communication device other than the second communication device in a preemption transmission mode.

In a possible implementation, the preemption setup request message is a target wake time TWT setup request message, and the preemption setup response message is a TWT setup response message.

In a possible implementation, the first communication device is a terminal device, the second communication device is an access point device, and before receiving the preemption setup request message sent by the first communication device, the method further includes:
sending a beacon frame through broadcasting, where the beacon frame includes a restricted TWT element (restricted TWT element), the restricted TWT element includes second indication information, and the second indication information indicates that preemption transmission is allowed.

In a possible implementation, after sending the preemption setup response message to the first communication device, the method further includes:
sending a first data packet to the first communication device, where the first data packet includes preemption indication information, and the preemption indication information indicates that the first communication device is allowed to perform preemption transmission after receiving the first data packet, or the preemption indication information indicates that a preemption transmission mode used by the first communication device after receiving the first data packet is allowed; and
receiving data of a low-latency service that is sent by the first communication device through preemption transmission.

In a possible implementation, after sending the preemption setup response message to the first communication device, the method further includes:
sending a first data packet to the first communication device; and
receiving data of a low-latency service that is sent by the first communication device through preemption transmission, where the data of the low-latency service is sent by the first communication device to the second communication device through preemption transmission when the first communication device determines that a traffic identifier corresponding to data in the first data packet is included in the fourth traffic identifier information.

According to a fourth aspect, an embodiment of this application provides a communication method, applied to a second communication device. The communication method may include:
sending a first data packet to a first communication device; and
receiving data of a low-latency service that is sent by the first communication device through preemption transmission.

In a possible implementation, the first data packet includes preemption indication information, and the preemption indication information indicates that the first communication device is allowed to perform preemption transmission after receiving the first data packet, or the preemption indication information indicates that a preemption transmission mode used by the first communication device after receiving the first data packet is allowed.

In a possible implementation, the data of the low-latency service is sent by the first communication device to the second communication device through preemption transmission when the first communication device determines that a traffic identifier corresponding to data in the first data packet is included in the fourth traffic identifier information, and the fourth traffic identifier information is a traffic identifier of a non-low-latency service that is allowed, by the second communication device, to be interrupted.

According to a fifth aspect, an embodiment of this application provides a communication device, including a memory and a processor. The memory stores a computer program. The processor is configured to read and execute the computer program stored in the memory, to enable any method provided in the first aspect or any method provided in the second aspect to be performed.

According to a sixth aspect, an embodiment of this application provides a communication device, including a memory and a processor. The memory stores a computer program. The processor is configured to read and execute the computer program stored in the memory, to enable any method provided in the third aspect or any method provided in the fourth aspect to be performed.

According to a seventh aspect, an embodiment of this application provides a communication system, including a plurality of communication devices. The communication device may be the communication device provided in the third aspect or the fourth aspect.

According to an eighth aspect, an embodiment of this application provides a computer-readable storage medium. The computer-readable storage medium stores computer-executable instructions. The computer-executable instructions are used to enable a computer to perform any method provided in the first aspect or the second aspect.

According to a ninth aspect, an embodiment of this application provides a computer-readable storage medium. The computer-readable storage medium stores computer-executable instructions. The computer-executable instructions are used to enable a computer to perform any method provided in the third aspect or the fourth aspect.

According to a tenth aspect, an embodiment of this application provides a computer program product, including computer-executable instructions. The computer-executable instructions are used to enable a computer to perform any method provided in the first aspect or the second aspect.

According to an eleventh aspect, an embodiment of this application provides a computer program product, including computer-executable instructions. The computer-executable instructions are used to enable a computer to perform any method provided in the third aspect or the fourth aspect.

For technical effect that can be achieved in any one of the second aspect to the eleventh aspect, refer to the descriptions of the beneficial effect in the first aspect. Details are not described herein again.

### BRIEF DESCRIPTION OF DRAWINGS

FIG. 1 is a diagram of a communication system according to an embodiment of this application;
FIG. 2 is a diagram of interaction in a communication method according to an embodiment of this application;
FIG. 3 is a diagram of a preemption transmission mode 1 according to an embodiment of this application;
FIG. 4 is a diagram of a preemption transmission mode 2 according to an embodiment of this application;
FIG. 5 is a diagram of a preemption transmission mode 3 according to an embodiment of this application;
FIG. 6 is a diagram of a preemption transmission mode 4 according to an embodiment of this application;
FIG. 7 is a diagram of a preemption transmission mode 5 according to an embodiment of this application;
FIG. 8 is a diagram of a preemption transmission mode 6 according to an embodiment of this application;
FIG. 9 is a diagram of a TWT service process according to an embodiment of this application;
FIG. 10 is a diagram of a restricted TWT element according to an embodiment of this application;
FIG. 11 is a diagram of interaction in another communication method according to an embodiment of this application;
FIG. 12 is a flowchart of a communication method according to an embodiment of this application;
FIG. 13 is a flowchart of another communication method according to an embodiment of this application;
FIG. 14 is a flowchart of another communication method according to an embodiment of this application;
FIG. 15 is a flowchart of another communication method according to an embodiment of this application; and
FIG. 16 is a diagram of a structure of a communication device according to an embodiment of this application.

### DESCRIPTION OF EMBODIMENTS

To make the objectives, technical solutions, and advantages of embodiments of this application clearer, the following describes embodiments of this application in detail with reference to the accompanying drawings. Terms used in embodiments of this application are merely intended to describe specific embodiments of this application, but not to limit this application.

Before specific solutions provided in embodiments of this application are described, some terms in this application are described, to facilitate understanding by a person skilled in the art, but not to limit the terms in this application.
(1) Preemption (preemption) transmission: used to meet a data transmission requirement of a low-latency service or an ultra-low-latency service. In a preemption transmission process, data of a non-low-latency service that is currently being transmitted is interrupted, data of a low-latency service is preferentially transmitted, and the data transmission of the non-low-latency service is resumed after the transmission of the low-latency service is completed. The low-latency service and the non-low-latency service are defined relative to each other. The low-latency service may be a service in which a transmission latency of a data packet needs to be less than or equal to a specified latency value. The non-low-latency service may also have a requirement on a latency, but a latency required for the non-low-latency service is longer than a latency of the low-latency service.

The preemption transmission may be classified into physical layer protocol data unit (physical layer protocol data unit, PPDU)-level preemption and transmission opportunity (transmission opportunity, TXOP)-level preemption.

In the PPDU-level preemption, during transmission of a long packet (long PPDU) of a non-low-latency service, if a buffer data packet newly arriving at a transmit end includes a data packet of a low-latency service, the transmit end may interrupt the transmission of the long packet of the non-low-latency service, and transmit the data packet of the low-latency service. After the transmission of the data packet of the low-latency service is completed, the transmit end continues to transmit a remaining long packet, whose transmission has not been completed, of the non-low-latency service. The long packet is a long data packet.

In the TXOP-level preemption, within a TXOP, a transmit end initially sends a data frame PPDU 1 of a non-low-latency service, and if there is a transmission requirement (including a requirement of the transmit end, a receive end, or another communication device) for a data packet of a low-latency service, the data packet of the low-latency service may be transmitted within the same TXOP after transmission of the PPDU 1 is completed.

(2) Target wake time (target wake time, TWT): a technology defined in Wi-Fi 6 for power saving. A core idea of the TWT is to set some periodic time periods, where these time periods may be referred to as target wake time service periods (target wake time service period, TWT SP), so that a communication device needs to remain in an active state only within the TWT SP and may sleep in another time period, to save power.

The TWT may be classified into individual TWT (individual TWT) and broadcast TWT (broadcast TWT). In the individual TWT, each terminal device may separately establish a TWT agreement with an access point device. Therefore, each terminal device may have its own active time period and sleep time period. In the broadcast TWT, an access point device may establish a public TWT agreement for a group of terminal devices. The group of terminal devices includes a plurality of terminal devices, and the plurality of terminal devices operate within a same active time period and sleep in another time period.

In embodiments of this application, "a plurality of' means two or more. In view of this, in embodiments of this application, "a plurality of' may also be understood as "at least two". "At least one" may be understood as one or more, for example, understood as one, two, or more. For example, including at least one means including one, two, or more, and specific items that are included are not limited. For example, including at least one of A, B, and C may mean including A, B, C, A and B, A and C, B and C, or A, B, and C. "And/or" describes an association relationship between associated objects, and indicates that three relationships may exist. For example, A and/or B may indicate the following three cases: Only A exists, both A and B exist, and only B exists. In addition, the character "/" usually indicates an "or" relationship between the associated objects, unless otherwise specified.

Unless otherwise specified, ordinal numbers such as "first" and "second" in embodiments of this application are intended to distinguish between a plurality of objects, but not to limit an order, a time sequence, priorities, or importance of the plurality of objects.

A communication method provided in embodiments of this application may be applied to a communication system. The communication system may be a wireless local area network; or may be a long term evolution (long term evolution, LTE) or fifth-generation (5G) communication system; or may be a universal terrestrial radio access (universal terrestrial radio access, UTRA) system, an evolved UTRA (E-UTRAN) system, a new radio (new radio, NR) technology system, a GSM/EDGE radio access network-circuit switched (GSM EDGE radio access network-circuit switched, GERAN-CS) domain system, a GSM/EDGE radio access network-packet switched (GSM EDGE radio access network-packet switched, GERAN-PS) domain system, a code division multiple access (code division multiple access, CDMA) 2000-1xRTT system, a multi-radio access technology dual-connectivity (Multi-RAT Dual-Connectivity, MR-DC) system, or the like; or may be a hybrid architecture of a plurality of communication systems, for example, a hybrid architecture of LTE and 5G.

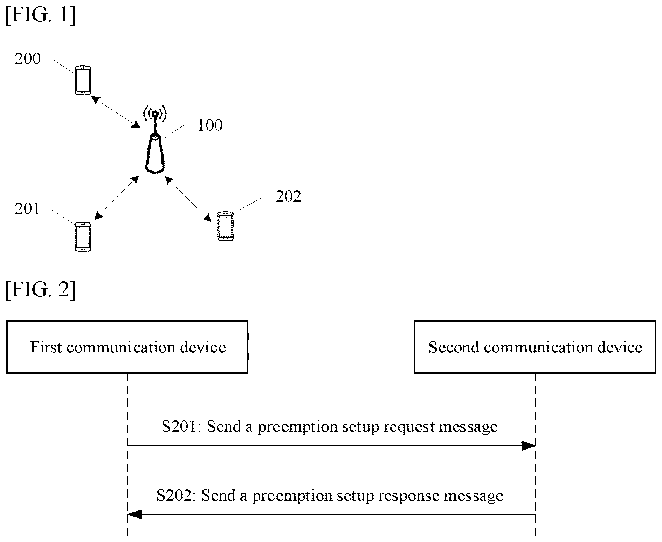

FIG. 1 is a diagram of a structure of a communication system. The communication system may include at least one access point (access point, AP) device and at least one terminal device. The terminal device may also be referred to as a station (station, STA) or a non-AP STA. FIG. 1 shows one access point device 100 and three terminal devices: a terminal device 200, a terminal device 201, and a terminal device 202. The three terminal devices are connected to the access point device 100, and access a communication network through the access point device 100. In FIG. 1, there are three terminal devices connected to the access point device 100. During actual application, there may be more than or fewer than three terminal devices. This is not limited in this application.

The access point device 100 may be understood as a communication device, and is a relay node in a communication network to transmit data or information between devices. For example, the access point device 100 may be a common base station (for example, a NodeB or an eNB), may be a new radio controller (new radio controller, NR controller), may be a gNodeB (gNB) or an en-gNB in a 5G system, may be a central network element (central unit), may be a new radio base station, may be a remote radio module, may be a micro base station, may be a relay (relay), may be a distributed network element (distributed unit), or may be a reception point (transmission and reception point, TRP), a transmission point (transmission point, TP), or any other radio access device, for example, a switch, a router, or a bridge. This is not limited in embodiments of this application. The terminal device may communicate with a plurality of base stations using different technologies. For example, the terminal device may communicate with a base station supporting an LTE network, or may communicate with a base station supporting a 5G network, or may support dual connectivity to a base station in an LTE network and a base station in a 5G network.

The terminal device may be user equipment (user equipment, UE), an access terminal, a subscriber unit, a subscriber station, a mobile station, a mobile console, a remote station, a remote terminal, a mobile device, a wireless terminal, a user agent, or a user apparatus. The terminal device may alternatively be a cellular phone, a cordless phone, a wireless local loop (wireless local loop, WLL) station, a personal digital assistant (personal digital assistant, PDA) device, a handheld device with a wireless communication function, a computing device or another processing device connected to a wireless modem, a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal, a terminal in a future 5G network, a terminal in a future evolved PLMN, or the like. The terminal device may alternatively be fixed or mobile, and the terminal device may be deployed on land, on water, or in the air.

In addition, the terminal device in embodiments of this application may alternatively be a terminal in an internet of things (internet of things, IoT) system. IoT is an important part of future information technology development. A main technical feature of the IoT is to connect an object to a network by using a communication technology, to implement an intelligent network of human-computer interconnection and thing-to-thing interconnection. The terminal in embodiments of this application may alternatively be a terminal in machine type communication (machine type communication, MTC). The terminal in this application may alternatively be a vehicle-mounted module, a vehicle-mounted assembly, a vehicle-mounted component, a vehicle-mounted chip, or a vehicle-mounted unit that is disposed in a vehicle as one or more components or units. The vehicle may implement a method in this application through the vehicle-mounted module, the vehicle-mounted assembly, the vehicle-mounted component, the vehicle-mounted chip, or the vehicle-mounted unit that is disposed in the vehicle. Therefore, embodiments of this application may be applied to an internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V). Application scenarios of the terminal device are not limited in embodiments of this application.

In the communication system shown in FIG. 1, both the terminal device and the access point device may be referred to as communication devices or network elements. The communication devices shown in FIG. 1 may perform communication through the IEEE 802.11 protocol. During communication, some services have a high requirement on a latency.

To improve communication effect of a low-latency service, embodiments of this application provide a communication method. The communication method may be performed by a first communication device. The first communication device may be an access point device or a terminal device. The first communication device sends a preemption setup request message to a second communication device, and receives a preemption setup response message returned by the second communication device, so that the first communication device establishes a preemption session with the second communication device. During the preemption session, the first communication device and the second communication device may preferentially transmit a data packet of a low-latency service in a preemption transmission mode, to improve communication effect of the low-latency service.

FIG. 2 is a diagram of interaction in a communication method according to an embodiment of this application. A first communication device shown in FIG. 2 may be an access point device or a terminal device. When the first communication device is an access point device, a second communication device may be a terminal device. When the first communication device is a terminal device, a second communication device may be a terminal device or an access point device. As shown in FIG. 2, in some embodiments, an interaction process between the first communication device and the second communication device may include the following steps.

S201: The first communication device sends a preemption setup request message to the second communication device.

The preemption setup request message may include preemption type information. The preemption type information indicates a preemption transmission mode of the first communication device. The preemption transmission mode of the first communication device may be a preemption transmission mode requested by the first communication device for use, or may be a preemption transmission mode supported by the first communication device. The preemption transmission mode includes some or all of the following: a PPDU-level transmit-end transmission mode; a PPDU-level receive-end transmission mode; a TXOP-level bidirectional transmit-end transmission mode; a TXOP-level hybrid transmit-end transmission mode; and a TXOP-level hybrid receive-end transmission mode.

The preemption transmission modes are separately described below.

Preemption transmission mode 1: PPDU-level transmit-end transmission mode. In this mode, in a process of sending a first data packet to the second communication device, the first communication device interrupts the sending of the first data packet, and sends a second data packet to the second communication device or a third communication device. The second data packet includes data of a low-latency service. The low-latency service is a service in which a transmission latency of a data packet needs to be less than or equal to a specified latency value. For example, the specified latency value may be several milliseconds or several microseconds.

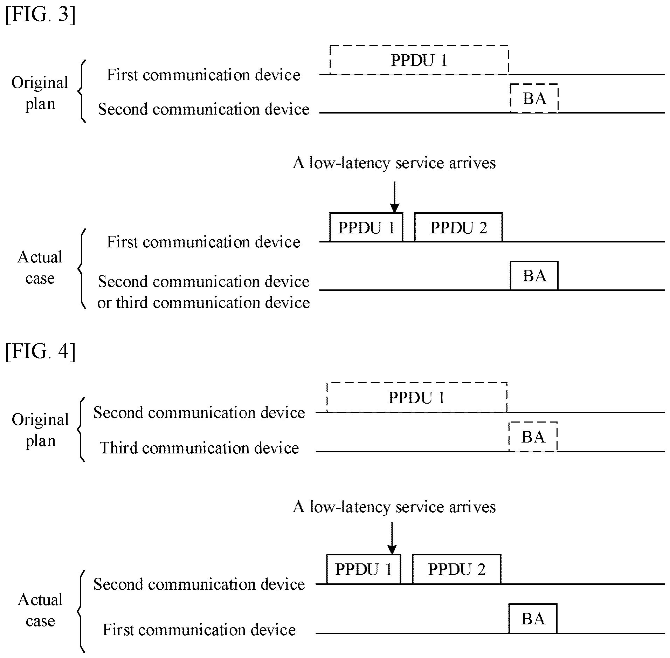

For example, as shown in FIG. 3, an original plan is as follows: The first communication device sends a PPDU 1 to the second communication device, and after the sending is completed, the second communication device returns an acknowledgement frame to the first communication device, where the acknowledgement frame may be a block acknowledgement (block ACK, BA). An actual case is as follows: In a process in which the first communication device sends the PPDU 1 to the second communication device, if a low-latency service arrives, the first communication device may interrupt the sending of the PPDU 1, and send a PPDU 2 to the second communication device or the third communication device, where the PPDU 2 includes data of the low-latency service.

Preemption transmission mode 2: PPDU-level receive-end transmission mode. In this mode, the first communication device may receive a second data packet sent by the second communication device. The second data packet is sent by the second communication device to the first communication device after the second communication device interrupts sending of a second data packet in a process of sending the second data packet to a third communication device. The second data packet includes data of a low-latency service.

Compared with the preemption transmission mode 1, in the preemption transmission mode 2, the first communication device and the second communication device exchange roles. For example, as shown in FIG. 4, an original plan is as follows: The second communication device sends a PPDU 1 to the third communication device, and after the sending is completed, the third communication device returns an acknowledgement frame to the second communication device. An actual case is as follows: In a process in which the second communication device sends the PPDU 1 to the third communication device, if a low-latency service to be sent to the first communication device arrives, the second communication device may interrupt the sending of the PPDU 1, and send a PPDU 2 to the first communication device, where the PPDU 2 includes data of the low-latency service to be sent to the first communication device.

Preemption transmission mode 3: TXOP-level bidirectional transmit-end transmission mode. In some embodiments, this mode may be as follows: The first communication device sends a first data packet to the second communication device after obtaining a TXOP, and after transmission of the first data packet is completed, receives a second data packet sent by the second communication device. The second data packet includes data of a low-latency service that arrives at the second communication device during receiving of the first data packet by the second communication device. In some other embodiments, this mode may be as follows: The first communication device sends a first data packet to the second communication device after obtaining a TXOP, and after transmission of the first data packet is completed, receives a response message for the first data packet and a second data packet that are sent by the second communication device. The second data packet includes data of a low-latency service that arrives at the second communication device during receiving of the first data packet by the second communication device.

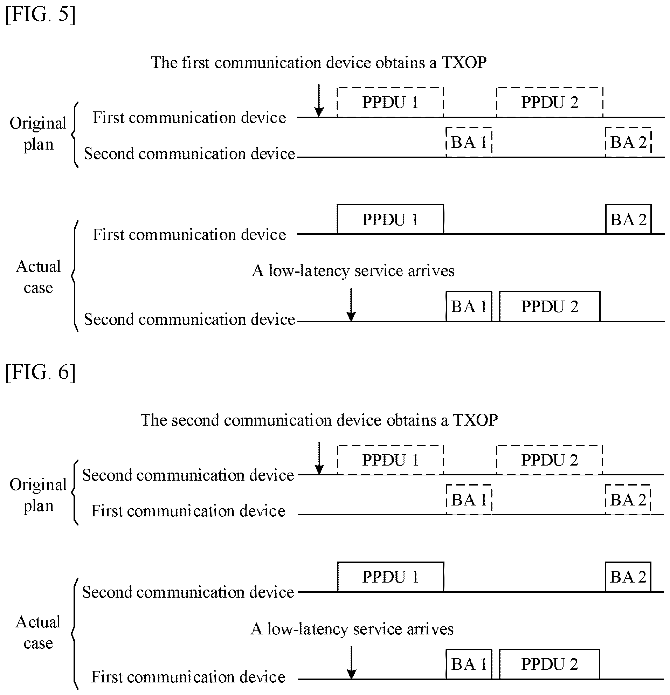

For example, as shown in FIG. 5, an original plan is as follows: The first communication device sends a PPDU 1 to the second communication device after obtaining a TXOP. After the sending is completed, the second communication device returns an acknowledgement frame BA 1 to the first communication device. Then the first communication device sends a PPDU n to the second communication device. After the sending is completed, the second communication device returns an acknowledgement frame BA n to the first communication device. An actual case is as follows: In a process in which the second communication device receives the PPDU 1 sent by the first communication device, if a low-latency service to be sent to the first communication device arrives, the second communication device may directly send a PPDU 2 to the first communication device after returning the acknowledgement frame BA 1 to the first communication device, where the PPDU 2 includes data of the low-latency service to be sent to the first communication device. After the sending of the PPDU 2 is completed, the first communication device sends an acknowledgement frame BA 2 to the second communication device. In another embodiment, in a process in which the second communication device receives the PPDU 1 sent by the first communication device, if a low-latency service to be sent to the first communication device arrives, the second communication device may alternatively directly send a PPDU 2 to the first communication device.

Preemption transmission mode 4: TXOP-level bidirectional receive-end transmission mode. In some embodiments, this mode may be as follows: After the second communication device obtains a TXOP, if a low-latency service to be sent to the second communication device arrives during receiving, by the first communication device, a first data packet sent by the second communication device, the first communication device may directly send a second data packet to the second communication device, where the second data packet includes a data packet of the low-latency service to be sent to the second communication device. In some other embodiments, this mode may be as follows: After the second communication device obtains a TXOP, if a low-latency service to be sent to the second communication device arrives during receiving, by the first communication device, a first data packet sent by the second communication device, the first communication device directly sends a second data packet to the second communication device after sending a response message for the first data packet to the second communication device, where the second data packet includes a data packet of the low-latency service to be sent to the second communication device.

Compared with the preemption transmission mode 3, in the preemption transmission mode 4, the first communication device and the second communication device exchange roles. For example, as shown in FIG. 6, an original plan is as follows: The second communication device sends a PPDU 1 to the first communication device after obtaining a TXOP. After the sending is completed, the first communication device returns an acknowledgement frame BA 1 to the second communication device. Then the second communication device sends a PPDU n to the first communication device. After the sending is completed, the first communication device returns an acknowledgement frame BA n to the second communication device. An actual case is as follows: In a process in which the first communication device receives the PPDU 1 sent by the second communication device, if a low-latency service to be sent to the second communication device arrives, the first communication device may directly send a PPDU 2 to the second communication device after returning the acknowledgement frame BA 1 to the second communication device, where the PPDU 2 includes data of the low-latency service to be sent to the second communication device. After the sending of the PPDU 2 is completed, the second communication device sends an acknowledgement frame BA 2 to the first communication device. In another embodiment, in a process in which the first communication device receives the PPDU 1 sent by the second communication device, if a low-latency service to be sent to the second communication device arrives, the first communication device may alternatively directly send a PPDU 2 to the second communication device.

Preemption transmission mode 5: TXOP-level hybrid transmit-end transmission mode. In some embodiments, this mode may be as follows: The first communication device sends a first data packet to the second communication device after obtaining a TXOP. During transmission of the first data packet, if a low-latency service to be sent to a third communication device arrives at the second communication device, the second communication device may directly send a second data packet to the third communication device, where the second data packet includes a data packet of the low-latency service to be sent to the third communication device. In some other embodiments, this mode may be as follows: The first communication device sends a first data packet to the second communication device after obtaining a TXOP. During transmission of the first data packet, if a low-latency service to be sent to a third communication device arrives at the second communication device, the second communication device directly sends a second data packet to the third communication device after sending a response message for the first data packet to the first communication device, where the second data packet includes a data packet of the low-latency service to be sent to the third communication device.

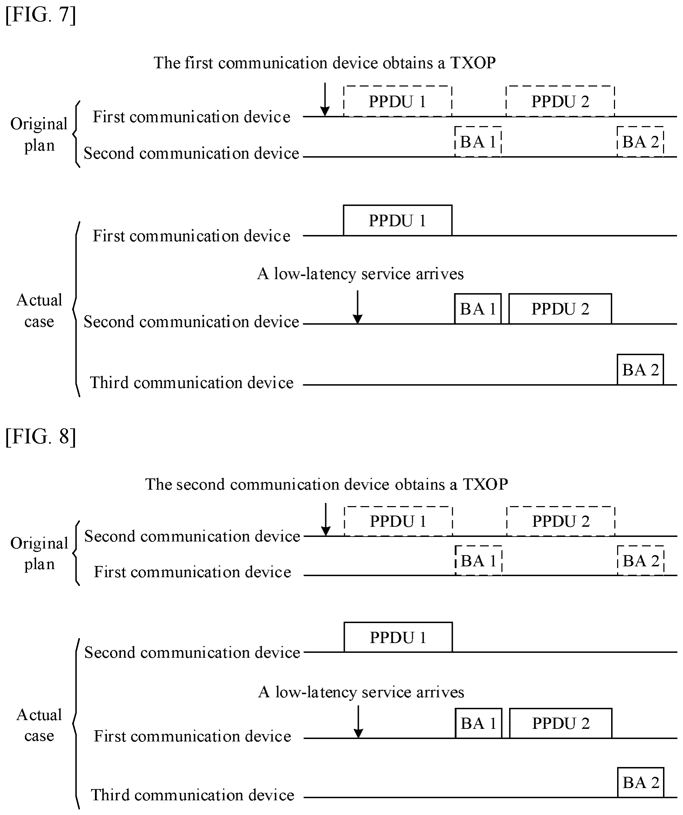

For example, as shown in FIG. 7, an original plan is as follows: The first communication device sends a PPDU 1 to the second communication device after obtaining a TXOP. After the sending is completed, the second communication device returns an acknowledgement frame BA 1 to the first communication device. Then the first communication device sends a PPDU n to the second communication device. After the sending is completed, the second communication device returns an acknowledgement frame BA n to the first communication device. An actual case is as follows: In a process in which the second communication device receives the PPDU 1 sent by the first communication device, if a low-latency service to be sent to the third communication device arrives, the second communication device may directly send a PPDU 2 to the third communication device after returning the acknowledgement frame BA 1 to the first communication device, where the PPDU 2 includes data of the low-latency service to be sent to the third communication device. After the sending of the PPDU 2 is completed, the third communication device sends an acknowledgement frame BA 2 to the second communication device. In another embodiment, in a process in which the second communication device receives the PPDU 1 sent by the first communication device, if a low-latency service to be sent to the third communication device arrives, the second communication device may alternatively directly send a PPDU 2 to the third communication device.

Preemption transmission mode 6: TXOP-level hybrid receive-end transmission mode. In some embodiments, this mode may be as follows: After the second communication device obtains a TXOP, if a low-latency service to be sent to a third communication device arrives during receiving, by the first communication device, a first data packet sent by the second communication device, the first communication device may directly send a second data packet to the third communication device, where the second data packet includes a data packet of the low-latency service to be sent to the third communication device. In some other embodiments, this mode may be as follows: After the second communication device obtains a TXOP, if a low-latency service to be sent to a third communication device arrives during receiving, by the first communication device, a first data packet sent by the second communication device, the first communication device directly sends a second data packet to the third communication device after sending a response message for the first data packet to the second communication device, where the second data packet includes a data packet of the low-latency service to be sent to the third communication device.

Compared with the preemption transmission mode 5, in the preemption transmission mode 6, the first communication device and the second communication device exchange roles. For example, as shown in FIG. 8, an original plan is as follows: The second communication device sends a PPDU 1 to the first communication device after obtaining a TXOP. After the sending is completed, the first communication device returns an acknowledgement frame BA 1 to the second communication device. Then the second communication device sends a PPDU n to the first communication device. After the sending is completed, the first communication device returns an acknowledgement frame BA n to the second communication device. An actual case is as follows: In a process in which the first communication device receives the PPDU 1 sent by the second communication device, if a low-latency service to be sent to the third communication device arrives, the first communication device may directly send a PPDU 2 to the third communication device after returning the acknowledgement frame BA 1 to the second communication device, where the PPDU 2 includes data of the low-latency service to be sent to the third communication device. After the sending of the PPDU 2 is completed, the third communication device sends an acknowledgement frame BA2 to the first communication device. In another embodiment, in a process in which the first communication device receives the PPDU 1 sent by the second communication device, if a low-latency service to be sent to the third communication device arrives, the first communication device may alternatively directly send a PPDU 2 to the third communication device.

The preemption type information in the preemption setup request message indicates one or more of the foregoing preemption transmission modes.

In some embodiments, the preemption type information may include a plurality of indication fields, each indication field corresponds to one preemption transmission mode, and each indication field indicates whether the first communication device uses a corresponding preemption transmission mode. For example, the preemption type information may include six indication fields corresponding to the foregoing six preemption transmission modes, and each indication field indicates whether the first communication device uses a corresponding preemption transmission mode. For example, a first indication field indicates whether the first communication device uses the preemption transmission mode 1, where a value of the first indication field being "0" indicates that the first communication device uses the preemption transmission mode 1, and a value of the first indication field being "1" indicates that the first communication device does not use the preemption transmission mode 1; a second indication field indicates whether the first communication device uses the preemption transmission mode 2, where a value of the second indication field being "0" indicates that the first communication device uses the preemption transmission mode 2, and a value of the second indication field being "1" indicates that the first communication device does not use the preemption transmission mode 2; and so on.

In some other embodiments, the preemption type information may include one indication field, and different values of the indication field indicate different combinations (a maximum of 2⁶ combinations) of preemption transmission modes used by the first communication device. For example, a value of the indication field being "01" indicates that the first communication device uses the preemption transmission mode 1, a value of the indication field being "04" indicates that the first communication device uses the preemption transmission mode 1 and the preemption transmission mode 2, and a value of the indication field being "64" indicates that the first communication device uses all of the foregoing six preemption transmission modes.

In some other embodiments, the preemption type information may include a PPDU indication field, and the PPDU indication field indicates whether the first communication device uses a PPDU-level transmission mode. For example, a value of the PPDU indication field being "0" indicates that the first communication device uses a PPDU-level transmission mode, to be specific, the first communication device uses the preemption transmission mode 1 and the preemption transmission mode 2; and a value of the PPDU indication field being "2" indicates that the first communication device does not use a PPDU-level transmission mode, to be specific, the first communication device does not use the preemption transmission mode 1 or the preemption transmission mode 2.

In some other embodiments, the preemption type information may include a TXOP indication field, and the TXOP indication field indicates whether the first communication device uses a TXOP-level transmission mode. For example, a value of the TXOP indication field being "0" indicates that the first communication device uses a TXOP-level transmission mode, to be specific, the first communication device uses the preemption transmission mode 3, the preemption transmission mode 4, the preemption transmission mode 5, and the preemption transmission mode 6; and a value of the TXOP indication field being "1" indicates that the first communication device does not use a TXOP-level transmission mode, to be specific, the first communication device does not use the preemption transmission mode 3, the preemption transmission mode 4, the preemption transmission mode 5, or the preemption transmission mode 6.

In some other embodiments, the preemption type information may include a transmit-end indication field, and the transmit-end indication field indicates whether the first communication device uses a preemption transmission mode when serving as a transmit end. For example, a value of the transmit-end indication field being "0" indicates that the first communication device uses a preemption transmission mode when serving as a transmit end, to be specific, the first communication device uses the preemption transmission mode 1, the preemption transmission mode 3, and the preemption transmission mode 5; and a value of the transmit-end indication field being "1" indicates that the first communication device does not use a preemption transmission mode when serving as a transmit end, to be specific, the first communication device does not use the preemption transmission mode 1, the preemption transmission mode 3, or the preemption transmission mode 5.

In some other embodiments, the preemption type information may include a receive-end indication field, and the receive-end indication field indicates whether the first communication device uses a preemption transmission mode when serving as a receive end. For example, a value of the receive-end indication field being "0" indicates that the first communication device uses a preemption transmission mode when serving as a receive end, to be specific, the first communication device uses the preemption transmission mode 2, the preemption transmission mode 4, and the preemption transmission mode 6; and a value of the receive-end indication field being "1" indicates that the first communication device does not use a preemption transmission mode when serving as a receive end, to be specific, the first communication device does not use the preemption transmission mode 2, the preemption transmission mode 4, or the preemption transmission mode 6.

In some embodiments, the preemption setup request message may include one or more of first traffic identifier information, second traffic identifier information, and first preemption duration information.

The first traffic identifier information is a traffic identifier of a low-latency service for which the first communication device allows a data packet to be transmitted in a preemption transmission mode. The first traffic identifier information may be in a form of a traffic identifier bitmap or a traffic identifier list. When the first traffic identifier information is a traffic identifier bitmap, the first traffic identifier information may include a downlink traffic identifier bitmap, or the first traffic identifier information may include an uplink traffic identifier bitmap, or the first traffic identifier information may include a downlink traffic identifier bitmap and an uplink traffic identifier bitmap. The uplink traffic identifier bitmap indicates an uplink service that is allowed, by the first communication device, to be transmitted in a preemption transmission mode. The downlink traffic identifier bitmap indicates a downlink service that is allowed, by the first communication device, to be transmitted in a preemption transmission mode.

The second traffic identifier information is a traffic identifier of a non-low-latency service for which the first communication device allows transmission to be interrupted. The second traffic identifier information may be in a form of a traffic identifier bitmap or a traffic identifier list. When the second traffic identifier information is a traffic identifier bitmap, the second traffic identifier information may include a downlink traffic identifier bitmap, or the second traffic identifier information may include an uplink traffic identifier bitmap, or the first traffic identifier information may include a downlink traffic identifier bitmap and an uplink traffic identifier bitmap. The uplink traffic identifier bitmap indicates an uplink service for which the first communication device allows transmission to be interrupted. The downlink traffic identifier bitmap indicates a downlink service for which the first communication device allows transmission to be interrupted.

The first preemption duration information indicates maximum duration for which the first communication device allows an obtained TXOP to be occupied by a communication device other than the first communication device in a preemption transmission mode.

For example, a frame structure of a data frame of the preemption setup request message may be shown in Table 1.

**Table 1**

| Sequence number (order) | Meaning (meaning) |
|---|---|
| 1 | Message type (category) |
| 2 | UHR action (UHR action) |
| 3 | Preemption control (preemption control) |
| 4 | First traffic identifier bitmap (TID bitmap) |
| 5 | Second traffic identifier bitmap (low TID bitmap) |

As shown in Table 1, the preemption setup request message may include the following fields:
Category field: A value of the category field being a specified value indicates that the data frame is a UHR action frame.

UHR action field: A value of the UHR action field being a specified value indicates that the data frame is a preemption setup request (preemption setup request) message.

The preemption control field may carry the preemption type information and the first preemption duration information. The TID bitmap field may be a field corresponding to the first traffic identifier information, and the low TID bitmap field may be a field corresponding to the second traffic identifier information.

S202: The second communication device sends a preemption setup response message to the first communication device.

The preemption setup response message indicates whether a preemption session is successfully established. The preemption setup response message may include status indication information. The status indication information indicates whether the preemption session is successfully established. The status indication information may be a status code.

In some embodiments, the preemption setup response message may further include one or more of preemption type information, third traffic identifier information, fourth traffic identifier information, and second preemption duration information of the second communication device.

The preemption type information of the second communication device indicates a preemption transmission mode of the second communication device. The preemption transmission mode of the second communication device may be a preemption transmission mode that the second communication device allows the first communication device to use, or may be a preemption transmission mode supported by the second communication device. For settings of a type of the preemption transmission mode and a format of the preemption type information of the second communication device, refer to the preemption setup request message. Details are not described herein again.

The third traffic identifier information is a traffic identifier of a low-latency service for which the second communication device allows a data packet to be transmitted in a preemption transmission mode. For example, the third traffic identifier information may be a traffic identifier of a low-latency service for which the second communication device allows the first communication device to transmit a data packet in a preemption transmission mode, or the third traffic identifier information may be a traffic identifier of a low-latency service for which the second communication device transmits a data packet in a preemption transmission mode. The third traffic identifier information may be in a form of a traffic identifier bitmap or a traffic identifier list. When the third traffic identifier information is a traffic identifier bitmap, the third traffic identifier information may include a downlink traffic identifier bitmap, or the third traffic identifier information may include an uplink traffic identifier bitmap, or the third traffic identifier information may include a downlink traffic identifier bitmap and an uplink traffic identifier bitmap. The uplink traffic identifier bitmap indicates an uplink service that is allowed, by the second communication device, to be transmitted in a preemption transmission mode. The downlink traffic identifier bitmap indicates a downlink service that is allowed, by the second communication device, to be transmitted in a preemption transmission mode.

The fourth traffic identifier information is a traffic identifier of a non-low-latency service for which the second communication device allows transmission to be interrupted. For example, the fourth traffic identifier information may be a traffic identifier of a non-low-latency service for which the first communication device allows transmission to be interrupted and upon which the second communication device is agreed, or the fourth traffic identifier information may be a traffic identifier of a non-low-latency service for which the second communication device allows transmission to be interrupted. The fourth traffic identifier information may be in a form of a traffic identifier bitmap or a traffic identifier list. When the fourth traffic identifier information is a traffic identifier bitmap, the fourth traffic identifier information may include a downlink traffic identifier bitmap, or the fourth traffic identifier information may include an uplink traffic identifier bitmap, or the fourth traffic identifier information may include a downlink traffic identifier bitmap and an uplink traffic identifier bitmap. The uplink traffic identifier bitmap indicates an uplink service for which the second communication device allows transmission to be interrupted. The downlink traffic identifier bitmap indicates a downlink service for which the second communication device allows transmission to be interrupted.

The second preemption duration information indicates maximum duration for which the second communication device allows an obtained TXOP to be occupied by a communication device other than the second communication device in a preemption transmission mode.

For example, a frame structure of a data frame of the preemption setup response message may be shown in Table 2.

**Table 2**

| Sequence number (order) | Meaning (meaning) |
|---|---|
| 1 | Message type (category) |
| 2 | UHR action (UHR action) |
| 3 | Status code (status code) |
| 4 | Preemption control (preemption control) |
| 5 | First traffic identifier bitmap (TID bitmap) |
| 6 | Second traffic identifier bitmap (low TID bitmap) |

As shown in Table 2, the preemption setup response message may include the following fields:
Category field: A value of the category field being a specified value indicates that the data frame is a UHR action frame.

UHR action field: A value of the UHR action field being a specified value indicates that the data frame is a preemption setup response message.

Status code field: The status code field indicates whether the preemption session is successfully established.

The preemption control field may carry the preemption type information of the second communication device and the second preemption duration information. The TID bitmap field may be a field corresponding to the third traffic identifier information, and the low TID bitmap field may be a field corresponding to the fourth traffic identifier information.

In some other embodiments, if the second communication device is an access point device, the access point device may periodically broadcast a beacon (beacon) frame to a terminal device. The beacon frame may include one or more of preemption type information, third traffic identifier information, fourth traffic identifier information, and second preemption duration information of the second communication device. If the first communication device is a terminal device, the first communication device may receive the beacon frame sent by the second communication device through broadcasting, and obtain the preemption type information, the third traffic identifier information, the fourth traffic identifier information, or the second preemption duration information of the second communication device that is carried in the beacon frame.

During communication, in a process in which the second communication device sends a long data packet of a non-low-latency service to the third communication device, the first communication device may also receive the data packet. To better save power, the first communication device determines, based on information in a preamble of the data packet, that the first communication device does not need to receive the data packet, and enters a sleep state. The sleep state lasts until transmission end time of the data packet. The transmission end time of the data packet may be predicted by the first communication device based on a length of the data packet. Before the transmission end time of the data packet arrives, if the second communication device interrupts the sending of the data packet of the non-low-latency service and sends a data packet of a low-latency service to the first communication device, because the first communication device is in the sleep state, the first communication device cannot normally receive the data packet of the low-latency service, and the data packet may be lost.

To reduce occurrences of a case that a receive-end communication device is in a sleep state and therefore cannot normally receive a data packet of a low-latency service, in some embodiments, if the first communication device may use the foregoing preemption transmission mode 2, the first communication device disables an intra-PPDU power save (intra-PPDU power save) function within a specified time period after the preemption session is successfully established. For example, the specified time period may be a time period corresponding to the preemption session.

The first communication device disables a device power save function within a specified time period. To be specific, the first communication device does not enter the sleep state when receiving a data packet that the first communication device does not need to receive. When the second communication device sends a data packet of a non-low-latency service to the third communication device, if the second communication device interrupts the sending of the data packet of the non-low-latency service and sends a data packet of a low-latency service to the first communication device through preemption transmission, because the first communication device does not enter the sleep state, the first communication device may receive the data packet of the low-latency service that is sent by the second communication device, to reduce a loss of the data packet of the low-latency service.

In this embodiment of this application, the first communication device may disable the intra-PPDU power save function to implement the preemption transmission mode 2. After disabling the intra-PPDU power save function, the first communication device may notify the second communication device. For example, in some embodiments, after the preemption session is successfully established, the first communication device may disable the intra-PPDU power save function, and send notification information to the second communication device to notify the second communication device that the first communication device has disabled the intra-PPDU power save function. In some other embodiments, the first communication device may alternatively disable the intra-PPDU power save function without establishing a preemption session with the second communication device, and send notification information to the second communication device to notify the second communication device that the first communication device has disabled the intra-PPDU power save function. After receiving the notification information sent by the first communication device, the second communication device may send data of a low-latency service to the first communication device in the preemption transmission mode 2. The notification information may be carried in an A-Control field of an HT-Control field in a message sent by the first communication device to the second communication device, or may be carried in an EHT OM Control field or a UHR OM Control field in a management frame or a data frame. For example, a structure of the EHT OM Control field may be shown in Table 3.

**Table 3**

| | | | | |
|---|---|---|---|---|
| Rx NSS Extension | Channel Width Extension | Rx NSS Extension | intra-PPDU power save Disable | Reserved |

As shown in Table 3, the EHT OM Control field may include a receive number of spatial streams extension (Rx NSS Extension) field, a channel width extension (Channel Width Extension) field, a transmit number of spatial streams extension (Rx NSS Extension) field, an intra-PPDU power save disable (intra-PPDU power save Disable) field, and a reserved (Reserved) field. The intra-PPDU power save Disable field is the notification information sent by the first communication device to the second communication device.

In the foregoing embodiment, the preemption session is established, and the intra-PPDU power save function is disabled within the specified time, so that successful implementation of preemption communication can be determined, to avoid a loss of a data packet of a low-latency service.

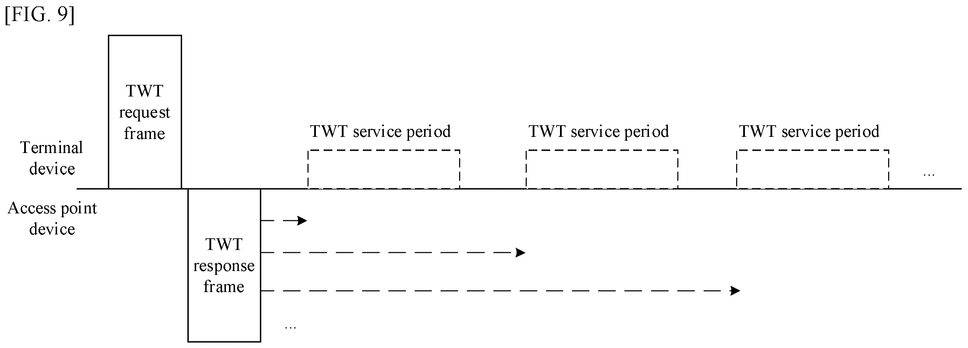

In some other embodiments, preemption transmission may be limited to a restricted target wake time service period (restricted TWT SP, R-TWT SP). For example, TWT may be classified into individual TWT and broadcast TWT. The individual TWT means that a TWT requesting station (TWT Requesting STA, requesting station for short) sends a TWT request message to a TWT responding station (TWT Responding STA, responding station for short) to request to set wake time. After receiving the TWT request message, the responding station sends a TWT response message to the requesting station. After the interaction succeeds, a TWT agreement is established between the requesting station and the responding station. Both the requesting station and the responding station are communication devices. After the TWT agreement is reached, both the requesting station and the responding station should remain in an active state within an agreed-upon time period, to send and receive data. Out of the time period, the requesting station and the responding station may sleep to save power. A terminal device may send a TWT agreement setup request to an access point device. To be specific, the terminal device is a requesting station, and the access point device is a responding station. Certainly, an access point device may alternatively initiate a TWT agreement setup request to a terminal device. After a TWT agreement is established, an agreed-upon active time period is referred to as a TWT service period (Service Period, SP). As shown in FIG. 9, each TWT agreement may include a plurality of periodically occurring TWT service periods that have equal duration.

Different from the individual TWT, the broadcast TWT provides a "batch management" mechanism. An access point device may establish a series of periodically occurring TWT service periods with a plurality of terminal devices. In the TWT service periods, the plurality of terminal devices need to remain in an active state, to communicate with the access point device.

The access point device may include information about one or more pieces of broadcast TWT in a beacon frame, and each piece of broadcast TWT is jointly represented by a broadcast TWT identifier and a MAC address of the access point device. After a terminal device receives the beacon frame, if the terminal device intends to join broadcast TWT, the terminal device may send a broadcast TWT setup request message to the access point device, to join the broadcast TWT. When establishing broadcast TWT, the terminal device needs to specify a broadcast TWT identifier (ID) to request to join a specific piece of broadcast TWT. After joining a specific piece of broadcast TWT, the terminal device may wake up based on a service period indicated by a TWT parameter set of the broadcast TWT, to communicate with the access point device. It should be noted that, if the terminal device supports broadcast TWT but does not explicitly join a specific piece of broadcast TWT, the terminal device participates in broadcast TWT with a broadcast TWT ID of 0 by default.

Similar to the individual TWT, a parameter set of the broadcast TWT also specifies an occurrence periodicity of a TWT service period and duration of each TWT service period. In addition, a parameter of the broadcast TWT further includes a life cycle of the broadcast TWT. The life cycle is measured in a unit of a beacon inter-frame space, and indicates duration of established broadcast TWT.

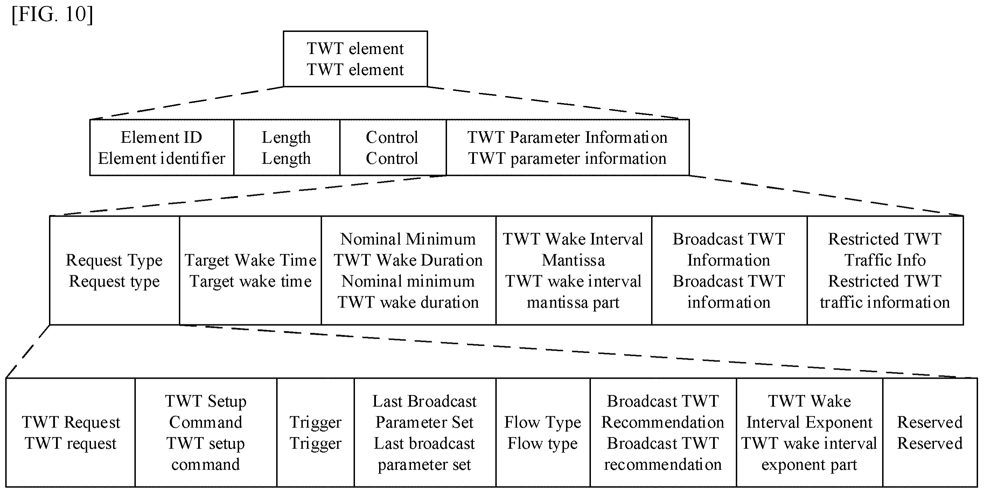

Restricted target wake time (restricted TWT) is a special type of broadcast TWT, and an R-TWT SP defined by the restricted TWT is used to serve a low-latency service. The access point device may include a TWT element (TWT element) in a beacon frame to declare service time of the restricted TWT. As shown in FIG. 10, a value of a broadcast TWT recommendation (Broadcast TWT Recommendation) field in a request type (Request Type) field in TWT parameter information (TWT Parameter Information) in the TWT element may be set to 4, to represent the restricted TWT.

After the access point device declares the restricted TWT in the beacon frame, the terminal device may send a request frame (TWT setup frame) to the access point device, to request to access the restricted TWT and become a member of the restricted TWT, to send a data packet of a low-latency service in the R-TWT SP.

When preemption transmission is limited to the R-TWT SP, a communication device disables an intra-PPDU power save function in the R-TWT SP, and uses the intra-PPDU power save function only out of the R-TWT SP.

In some embodiments, the access point device may periodically broadcast a beacon frame. The access point device may include R-TWT element indication information in the beacon frame, where the R-TWT element indication information indicates whether a preemption transmission mode is allowed to be used for data transmission in an R-TWT SP corresponding to an R-TWT element. In other words, the access point device may include indication information in a restricted TWT element in the beacon frame, to indicate whether a preemption mechanism can be used for transmission in an R-TWT SP corresponding to the restricted TWT element. Alternatively, the restricted TWT element carries preemption type information, to indicate a preemption transmission mode that can be used in the R-TWT SP. Types of preemption transmission modes are described in the foregoing embodiments, and details are not described herein again.

In another implementation, when establishing a restricted TWT session (establish restricted TWT membership), the terminal device may indicate whether preemption transmission is allowed, a preemption transmission mode, and a parameter in preemption transmission. The parameter in preemption transmission may include at least one of the first traffic identifier information, the second traffic identifier information, or the first preemption duration information.

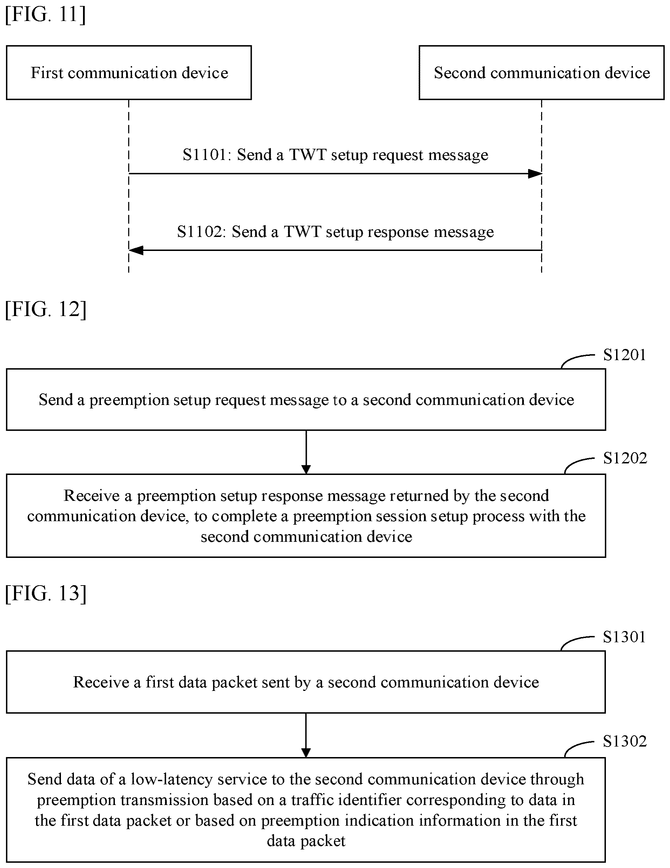

For example, as shown in FIG. 11, a process of establishing a restricted TWT session may include the following steps.

S1101: A first communication device sends a TWT setup request message to a second communication device.

The TWT setup request message may also be referred to as a TWT setup frame (TWT setup frame), and may be understood as a preemption setup request message. The TWT setup frame is used to request to establish a restricted TWT membership. The TWT setup frame carries indication information, to indicate that the first communication device requests to transmit data in a preemption transmission mode in a corresponding R-TWT SP.

S1102: The second communication device sends a TWT setup response message to the first communication device.

The TWT setup response message may also be referred to as a TWT setup response frame, and may be understood as a preemption setup response message. The TWT setup response frame indicates that restricted TWT is successfully established.

If the first communication device indicates that the first communication device uses preemption transmission or PPDU-level preemption transmission, the first communication device disables an intra-PPDU power save function in an SP corresponding to the established restricted TWT.

For example, it is assumed that the first communication device is a terminal device and the second communication device is an access point device. When the terminal device is associated with the access point device, the terminal device may include indication information in a sent TWT setup frame, to indicate whether the terminal device uses preemption transmission or indicate a preemption transmission mode used by the terminal device. Then, after establishing a restricted TWT session (establish restricted TWT membership) with the access point device, the terminal device may disable an intra-PPDU power save function in a corresponding restricted TWT SP.

In the foregoing embodiment, a preemption function is used only in the restricted TWT SP to implement low-latency communication, and the intra-PPDU power save function may be used out of the SP to achieve low power consumption.

In some embodiments, after the first communication device and the second communication device establish a preemption session through the preemption setup process shown in FIG. 2 or the preemption setup process shown in FIG. 11, the first communication device and the second communication device may transmit data in a preemption transmission mode.

During data transmission, the first communication device may receive a first data packet sent by the second communication device. In an embodiment, the first communication device may determine, based on a traffic identifier corresponding to data in the first data packet, whether the first communication device is allowed to perform preemption transmission after receiving the first data packet. For example, if the traffic identifier corresponding to the data in the first data packet is included in the fourth traffic identifier information, the first communication device may determine that the first communication device is allowed to perform preemption transmission after receiving the first data packet, and therefore the first communication device may send data of a low-latency service to the second communication device through preemption transmission.

In another embodiment, the first communication device may determine, based on preemption indication information included in the first data packet, whether the first communication device is allowed to perform preemption transmission after receiving the first data packet. The preemption indication information in the first data packet indicates that the first communication device is allowed to perform preemption transmission after receiving the first data packet. Alternatively, the preemption indication information in the first data packet indicates a preemption transmission type, to be specific, a preemption transmission mode that the first communication device is allowed to use after receiving the first data packet. The first communication device may send data of a low-latency service to the second communication device through preemption transmission based on the preemption indication information in the first data packet.

In some embodiments, it is assumed that the first data packet is a PPDU 1. The preemption indication information may be carried in an MPDU or an A-MPDU in the PPDU 1, or the preemption indication information may be carried in a physical layer preamble (for example, a UHR-SIG field) in the PPDU 1. If the preemption indication information is carried in the MPDU or the A-MPDU, the preemption indication information may be specifically carried in an HT-Control field in a MAC header.

In an optional embodiment, the preemption indication information may be Preemption allowed, and Preemption allowed may occupy 1 bit, to indicate whether preemption transmission is allowed. If preemption transmission is allowed, the first communication device may perform preemption transmission through one or more types of TXOP-level preemption transmission. In particular, the first communication device may perform preemption transmission in the foregoing preemption transmission mode 4 or preemption transmission mode 6.

In another optional embodiment, the preemption indication information may be Preemption type, and Preemption type may occupy 1 bit, to indicate a preemption transmission type. The preemption transmission type may include one or more types of TXOP-level preemption transmission. For example, Preemption type being a first value indicates that the preemption transmission mode 4 is allowed, and Preemption type being a second value indicates that the preemption transmission mode 6 is allowed.

In some other embodiments, the preemption indication information may be carried in a CAS Control field. For example, a CAS Control field shown in Table 4 carries Preemption allowed, and a CAS Control field shown in Table 5 carries Preemption type.

**Table 4**

| | | | | |
|---|---|---|---|---|
| AC Constraint | RDG/More PPDU | RSRT PPDU | Preemption allowed | ... |

**Table 5**

| | | | | |
|---|---|---|---|---|
| AC Constraint | RDG/More PPDU | RSRT PPDU | Preemption type | ... |

After determining that the first communication device is allowed to perform preemption transmission after receiving the first data packet, the first communication device may send data of a low-latency service to the second communication device in any one of the following manners.

Manner 1: Send a second data packet to the second communication device within preset time after sending an acknowledgement frame for the first data packet to the second communication device, where the second data packet includes the data of the low-latency service. The acknowledgement frame may be a BA frame, and the preset time may be less than a short inter-frame space (short inter-frame space, SIFS). For example, the preset time may be a reduced inter-frame space (reduced inter-frame space, RIFS).

Manner 2: Send a second data packet to the second communication device, where the second data packet includes an acknowledgement frame for the first data packet and the data of the low-latency service. The acknowledgement frame for the first data packet and the data of the low-latency service may be in a same A-MPDU.

Manner 3: Send a second data packet to the second communication device after sending an acknowledgement frame for the first data packet to the second communication device. The acknowledgement frame carries continuous-transmission indication information, and the continuous-transmission indication information indicates that a data packet is further to be sent to the second communication device after the acknowledgement frame is sent. The second data packet includes the data of the low-latency service.

In any one of the foregoing manners, after sending the first data packet, the second communication device knows that the second communication device is preempted, and the second communication device is not to perform subsequent data sending, but waits to receive the second data packet.

The communication method provided in embodiments of this application may be applied to a wireless local area network system that supports a next-generation Wi-Fi protocol of IEEE 802.11ax, for example, 802.11be, Wi-Fi 7, or EHT, or for another example, a next generation of 802.11be, such as an 802.11 series protocol like Wi-Fi 8, UHR, or Wi-Fi AI, and may be further applied to an ultra-wideband UWB-based wireless personal area network system and a sensing (sensing) system.

Based on the foregoing method embodiments, in some embodiments, a communication method performed by a first communication device may be shown in FIG. 12. The first communication device may be any network element in a communication system. To be specific, the first communication device may be a terminal device or an access point device. As shown in FIG. 12, the method may include the following steps.

S1201: Send a preemption setup request message to a second communication device.

S1202: Receive a preemption setup response message returned by the second communication device, to complete a preemption session setup process with the second communication device.

The preemption setup request message may include preemption type information, and the preemption type information indicates a preemption transmission mode of the first communication device.

In some embodiments, the preemption setup request message may be a target wake time TWT setup request message, and the preemption setup response message may be a TWT setup response message.

In some other embodiments, as shown in FIG. 13, a communication method performed by a first communication device may include the following steps.

S1301: Receive a first data packet sent by a second communication device.

S 1302: Send data of a low-latency service to the second communication device through preemption transmission based on a traffic identifier corresponding to data in the first data packet or based on preemption indication information in the first data packet.

In some embodiments, the first data packet includes preemption indication information, and the preemption indication information indicates that the first communication device is allowed to perform preemption transmission after receiving the first data packet, or the preemption indication information indicates that a preemption transmission mode used by the first communication device after receiving the first data packet is allowed.

In some other embodiments, the first communication device may send the data of the low-latency service to the second communication device through preemption transmission based on the traffic identifier corresponding to the data in the first data packet. For example, if the traffic identifier corresponding to the data in the first data packet is included in fourth traffic identifier information, the first communication device may send the data of the low-latency service to the second communication device through preemption transmission, where the fourth traffic identifier information is a traffic identifier of a non-low-latency service for which the second communication device allows transmission to be interrupted.

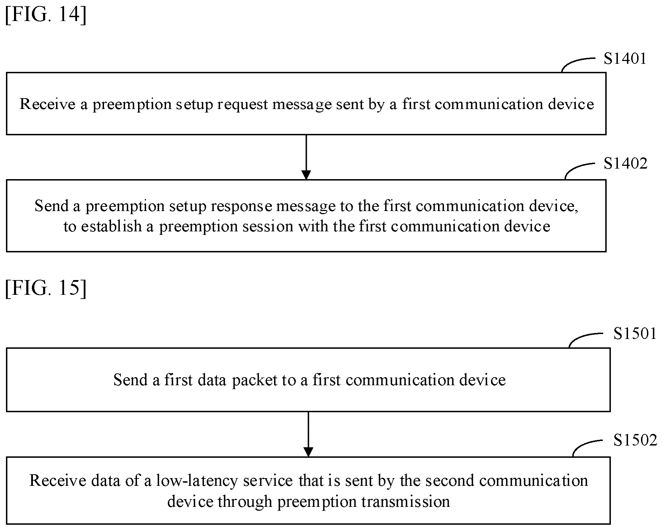

Based on the foregoing method embodiments, in some embodiments, a communication method performed by a second communication device may be shown in FIG. 14. The second communication device may be any network element in a communication system. To be specific, the second communication device may be a terminal device or an access point device. As shown in FIG. 14, the method may include the following steps.

S1401: Receive a preemption setup request message sent by a first communication device.

S1402: Send a preemption setup response message to the first communication device, to establish a preemption session with the first communication device.

The preemption setup response message includes status indication information, and the status indication information indicates whether the preemption session is successfully established.

In some other embodiments, as shown in FIG. 15, a communication method performed by a second communication device may include the following steps.

S1501: Send a first data packet to a first communication device.

S1502: Receive data of a low-latency service that is sent by the second communication device through preemption transmission.

Based on a same technical concept as that of the foregoing embodiments, an embodiment of this application further provides a communication device. The communication device may be the terminal device or the access point device shown in FIG. 1. The communication device may be configured to implement the functions in the foregoing method embodiments, and therefore can achieve the beneficial effect of the foregoing method embodiments.

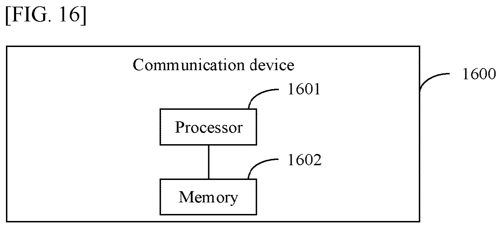

In some embodiments, as shown in FIG. 16, a structure of the communication device 1600 may include a processor 1601 and a memory 1602 connected to the processor 1601. The processor 1601 and the memory 1602 may be connected to each other through a bus. The processor 1601 may serve as a host processor of the communication device 1600, namely, a control core of the communication device 1600. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. A specific connection medium between the processor 1601 and the memory 1602 is not limited in this embodiment of this application.

The memory 1602 may include the foregoing memory. The memory 1602 may be a volatile memory, for example, a random access memory; or the memory may alternatively be a non-volatile memory, for example, a read-only memory ROM, a flash memory, a hard disk drive (hard disk drive, HDD), or a solid-state drive (solid-state drive, SSD); or the memory 1602 is any other medium that can carry or store expected program code in a form of instructions or data structures and that is accessible to a computer, but is not limited thereto. The memory 1602 may be a combination of the foregoing memories. The memory 1602 may be configured to store a software program and a module.

The processor 1601 may include one or more processors. The processor 1601 runs the software program and the module that are stored in the memory 1602 to perform various function applications and data processing of the communication device 1600, for example, the communication method provided in embodiments of this application.

It can be understood that the structure shown in this embodiment of this application does not constitute a specific limitation on the computing device. In some other embodiments of this application, the computing device may include more or fewer components than those shown in the figure, or some components may be combined, or some components may be split, or the components may be arranged differently. The components shown in the figure may be implemented by using hardware, software, or a combination of software and hardware.

An embodiment of this application further provides a communication system. As shown in FIG. 1, the communication system may include a plurality of communication devices, and the plurality of communication devices may include an access point device and a terminal device. A structure of the communication device is shown in FIG. 16. Details are not described herein again.

The method steps in embodiments of this application may be implemented by hardware, or may be implemented by a processor executing a computer program or instructions. The computer program or the instructions may constitute a computer program product. An embodiment of this application further provides a computer program product, including computer-executable instructions. In an embodiment, the computer-executable instructions are used to enable a computer to perform the functions in the method embodiment shown in any one of FIG. 12 to FIG. 15.

The computer-executable instructions may be stored in a computer-readable storage medium. An embodiment of this application further provides a computer-readable storage medium, and the computer-readable storage medium stores executable instructions. In an embodiment, the computer-executable instructions are used to enable a computer to perform the functions in the method embodiment shown in any one of FIG. 12 to FIG. 15.

The computer-readable storage medium provided in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of computer-readable storage medium well-known in the art.

The computer-executable instructions may be stored in the computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible to a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc (digital video disc, DVD); or may be a semiconductor medium, for example, a solid-state drive.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features. In addition, the terms "include", "have", and any variant thereof are intended to cover non-exclusive inclusion, for example, include a series of steps or units. A method, system, product, or device is not necessarily limited to those expressly listed steps or units, but may include other steps or units that are not expressly listed or that are inherent to such a process, method, product, or device.

Although this application is described with reference to specific features and embodiments thereof, it is clear that various modifications and combinations may be made to the features and embodiments without departing from the spirit and scope of this application. Correspondingly, this specification and the accompanying drawings are merely example descriptions of solutions defined by the appended claims, and are considered as covering any or all of modifications, variations, combinations, or equivalents within the scope of this application.

Clearly, a person skilled in the art can make various modifications and variations to this application without departing from the scope of this application. In this case, this application is intended to cover these modifications and variations of embodiments of this application provided that they fall within the scope of the claims of this application and their equivalent technologies.

## Claims

1. A communication method, applied to a first communication device, wherein the method comprises:
sending a preemption setup request message to a second communication device; and
receiving a preemption setup response message sent by the second communication device, to establish a preemption session with the second communication device.

2. The method according to claim 1, wherein the preemption setup request message comprises preemption type information, the preemption type information indicates a preemption transmission mode of the first communication device, and the preemption transmission mode comprises some or all of the following:
a physical layer protocol data unit PPDU-level transmit-end transmission mode;
a PPDU-level receive-end transmission mode;
a transmission opportunity TXOP-level bidirectional transmit-end transmission mode;
a TXOP-level bidirectional receive-end transmission mode;
a TXOP-level hybrid transmit-end transmission mode; and
a TXOP-level hybrid receive-end transmission mode.

3. The method according to claim 1 or 2, wherein after receiving the preemption setup response message returned by the second communication device, the method further comprises:
if the first communication device uses a specified preemption transmission mode during the preemption session, disabling an intra-PPDU power save intra-PPDU power save function within a specified time period, wherein the specified preemption transmission mode is the PPDU-level receive-end transmission mode.

4. The method according to claim 2 or 3, wherein the preemption type information comprises a plurality of indication fields, each indication field corresponds to one preemption transmission mode, and each indication field indicates whether the first communication device uses a corresponding preemption transmission mode; or
the preemption type information comprises one indication field, and different values of the indication field indicate different combinations of preemption transmission modes used by the first communication device; or
the preemption type information comprises a PPDU indication field or a TXOP indication field, wherein the PPDU indication field indicates whether the first communication device uses a PPDU-level transmission mode, and the TXOP indication field indicates whether the first communication device uses a TXOP-level transmission mode; or
the preemption type information comprises a transmit-end indication field or a receive-end indication field, wherein the transmit-end indication field indicates whether the first communication device uses a preemption transmission mode when serving as a transmit end, and the receive-end indication field indicates whether the first communication device uses a preemption transmission mode when serving as a receive end.

5. The method according to any one of claims 2 to 4, wherein the preemption setup request message comprises at least one of first traffic identifier information, second traffic identifier information, or first preemption duration information, wherein
the first traffic identifier information is a traffic identifier of a low-latency service for which the first communication device allows a data packet to be transmitted in a preemption transmission mode, the second traffic identifier information is a traffic identifier of a non-low-latency service for which the first communication device allows transmission to be interrupted, and the first preemption duration information indicates maximum duration for which the first communication device allows an obtained TXOP to be occupied by a communication device other than the first communication device in a preemption transmission mode.

6. The method according to any one of claims 2 to 5, wherein the preemption setup response message comprises status indication information, and the status indication information indicates whether the preemption session is successfully established.

7. The method according to claim 6, wherein the preemption setup response message further comprises at least one of preemption type information, third traffic identifier information, fourth traffic identifier information, or second preemption duration information of the second communication device, wherein the preemption type information of the second communication device indicates a preemption transmission mode of the second communication device, the third traffic identifier information is a traffic identifier of a low-latency service for which the second communication device allows a data packet to be transmitted in a preemption transmission mode, the fourth traffic identifier information is a traffic identifier of a non-low-latency service for which the second communication device allows transmission to be interrupted, and the second preemption duration information indicates maximum duration for which the second communication device allows an obtained TXOP to be occupied by a communication device other than the second communication device in a preemption transmission mode.

8. The method according to any one of claims 1 to 5, wherein the first communication device is a terminal device, the second communication device is an access point device, and before sending the preemption setup request message to the second communication device, the method further comprises:
receiving a beacon frame sent by the second communication device through broadcasting, wherein the beacon frame comprises at least one of preemption type information, third traffic identifier information, fourth traffic identifier information, or second preemption duration information of the second communication device, wherein
the preemption type information of the second communication device indicates a preemption transmission mode of the second communication device, the third traffic identifier information is a traffic identifier of a low-latency service for which the second communication device allows a data packet to be transmitted in a preemption transmission mode, the fourth traffic identifier information is a traffic identifier of a non-low-latency service for which the second communication device allows transmission to be interrupted, and the second preemption duration information indicates maximum duration for which the second communication device allows an obtained TXOP to be occupied by a communication device other than the second communication device in a preemption transmission mode.

9. The method according to any one of claims 1 to 7, wherein the preemption setup request message is a target wake time TWT setup request message, and the preemption setup response message is a TWT setup response message.

10. The method according to claim 9, wherein the TWT setup request message comprises first indication information, and the first indication information is used to request to use preemption transmission in a corresponding restricted target wake time service period restricted TWT SP.

11. The method according to claim 9 or 10, wherein the first communication device is a terminal device, the second communication device is an access point device, and before sending the preemption setup request message to the second communication device, the method further comprises:
receiving a beacon frame sent by the second communication device, wherein the beacon frame comprises a restricted TWT element restricted TWT element, the restricted TWT element comprises second indication information, and the second indication information indicates that preemption transmission is allowed.

12. The method according to any one of claims 1 to 11, wherein after receiving the preemption setup response message returned by the second communication device, the method further comprises:
receiving a first data packet sent by the second communication device, wherein the first data packet comprises preemption indication information; and
sending data of a low-latency service to the second communication device through preemption transmission based on the preemption indication information in the first data packet.

13. The method according to claim 12, wherein the preemption indication information indicates that the first communication device is allowed to perform preemption transmission after receiving the first data packet, or the preemption indication information indicates that a preemption transmission mode used by the first communication device after receiving the first data packet is allowed.

14. The method according to claim 7 or 8, wherein after receiving the preemption setup response message returned by the second communication device, the method further comprises:
receiving a first data packet sent by the second communication device; and
if a traffic identifier corresponding to data in the first data packet is comprised in the fourth traffic identifier information, sending data of a low-latency service to the second communication device through preemption transmission.

15. The method according to any one of claims 11 to 14, wherein sending the data of the low-latency service to the second communication device through preemption transmission comprises:
sending a second data packet to the second communication device within preset time after sending an acknowledgement frame for the first data packet to the second communication device, wherein the second data packet comprises the data of the low-latency service, and the preset time is less than a short inter-frame space SIFS; or
sending a second data packet to the second communication device, wherein the second data packet comprises an acknowledgement frame for the first data packet and the data of the low-latency service; or
sending a second data packet to the second communication device after sending an acknowledgement frame for the first data packet to the second communication device, wherein the acknowledgement frame carries continuous-transmission indication information, the continuous-transmission indication information indicates that a data packet is further to be sent to the second communication device after the acknowledgement frame is sent, and the second data packet comprises the data of the low-latency service.

16. A communication method, applied to a second communication device, wherein the method comprises:
receiving a preemption setup request message sent by a first communication device; and
sending a preemption setup response message to the first communication device, to establish a preemption session with the first communication device.

17. The method according to claim 16, wherein the preemption setup response message comprises status indication information, and the status indication information indicates whether the preemption session is successfully established.

18. The method according to claim 17, wherein the preemption setup response message further comprises at least one of preemption type information, third traffic identifier information, fourth traffic identifier information, or second preemption duration information of the second communication device, wherein the preemption type information indicates a preemption transmission mode of the second communication device, the third traffic identifier information is a traffic identifier of a low-latency service for which the second communication device allows a data packet to be transmitted in a preemption transmission mode, the fourth traffic identifier information is a traffic identifier of a non-low-latency service for which the second communication device allows transmission to be interrupted, and the second preemption duration information indicates maximum duration for which the second communication device allows an obtained TXOP to be occupied by a communication device other than the second communication device in a preemption transmission mode.

19. The method according to claim 18, wherein the preemption transmission mode comprises some or all of the following:
a physical layer protocol data unit PPDU-level transmit-end transmission mode;
a PPDU-level receive-end transmission mode;
a transmission opportunity TXOP-level bidirectional transmit-end transmission mode;
a TXOP-level bidirectional receive-end transmission mode;
a TXOP-level hybrid transmit-end transmission mode; and
a TXOP-level hybrid receive-end transmission mode.

20. The method according to claim 16 or 17, wherein the second communication device is an access point device, the first communication device is a terminal device, and before receiving the preemption setup request message sent by the first communication device, the method further comprises:
sending a beacon frame through broadcasting, wherein the beacon frame comprises at least one of preemption type information, third traffic identifier information, fourth traffic identifier information, or second preemption duration information of the second communication device, wherein
the preemption type information of the second communication device indicates a preemption transmission mode of the second communication device, the third traffic identifier information is a traffic identifier of a low-latency service for which the second communication device allows a data packet to be transmitted in a preemption transmission mode, the fourth traffic identifier information is a traffic identifier of a non-low-latency service for which the second communication device allows transmission to be interrupted, and the second preemption duration information indicates maximum duration for which the second communication device allows an obtained TXOP to be occupied by a communication device other than the second communication device in a preemption transmission mode.

21. The method according to any one of claims 16 to 19, wherein the preemption setup request message is a target wake time TWT setup request message, and the preemption setup response message is a TWT setup response message.

22. The method according to claim 21, wherein the first communication device is a terminal device, the second communication device is an access point device, and before receiving the preemption setup request message sent by the first communication device, the method further comprises:
sending a beacon frame through broadcasting, wherein the beacon frame comprises a restricted TWT element restricted TWT element, the restricted TWT element comprises second indication information, and the second indication information indicates that preemption transmission is allowed.

23. The method according to any one of claims 16 to 22, wherein after sending the preemption setup response message to the first communication device, the method further comprises:
sending a first data packet to the first communication device, wherein the first data packet comprises preemption indication information, and the preemption indication information indicates that the first communication device is allowed to perform preemption transmission after receiving the first data packet, or the preemption indication information indicates that a preemption transmission mode used by the first communication device after receiving the first data packet is allowed; and
receiving data of a low-latency service that is sent by the first communication device through preemption transmission.

24. The method according to claim 20, wherein after sending the preemption setup response message to the first communication device, the method further comprises:
sending a first data packet to the first communication device; and
receiving data of a low-latency service that is sent by the first communication device through preemption transmission, wherein the data of the low-latency service is sent by the first communication device to the second communication device through preemption transmission when the first communication device determines that a traffic identifier corresponding to data in the first data packet is comprised in the fourth traffic identifier information.

25. A communication device, comprising a memory and a processor, wherein the memory stores a computer program, and the processor is configured to read and execute the computer program stored in the memory, to enable the method according to any one of claims 1 to 24 to be performed.

26. A communication system, comprising a plurality of communication devices, wherein the communication device is the communication device according to claim 25.

27. A computer-readable storage medium, storing computer-executable instructions, wherein the computer-executable instructions are used to enable a computer to perform the method according to any one of claims 1 to 24.

28. A computer program product, comprising computer-executable instructions, wherein the computer-executable instructions are used to enable a computer to perform the method according to any one of claims 1 to 24.
